# EUROPÄISCHE PATENTSCHRIFT

(11) **EP 3 551 903 B1**
(45) Veröffentlichungstag und Bekanntmachung des Hinweises auf die Patenterteilung: **19.08.2020**
(21) Anmeldenummer: 17811188.6
(22) Anmeldetag: 17.11.2017
(51) Int. Cl.: F16D 48/06

(54) **VERFAHREN ZUM BETÄTIGEN EINER KUPPLUNG EINES HYBRIDANTRIEBSSTRANGES SOWIE ANTRIEBSSTRANG MIT KUPPLUNG**
METHOD FOR ACTUATING A CLUTCH OF A HYBRID DRIVE TRAIN, AND DRIVE TRAIN HAVING A CLUTCH
PROCÉDÉ PERMETTANT D'ACTIONNER UN EMBRAYAGE D'UNE CHAÎNE CINÉMATIQUE HYBRIDE AINSI QUE CHAÎNE CINÉMATIQUE COMPRENANT UN EMBRAYAGE

(30) Priorität: 09.12.2016 DE 102016123952
(43) Veröffentlichungstag der Anmeldung: 16.10.2019
(73) Patentinhaber: Schaeffler Technologies AG & Co. KG, 91074 Herzogenaurach (DE)
(72) Erfinder: MANNSPERGER, Ralf, 77855 Achern (DE)
(86) Internationale Anmeldenummer: PCT/DE2017/100985
(87) Internationale Veröffentlichungsnummer: WO 2018/103782

(56) Entgegenhaltungen:
- EP-A2- 2 014 946
- WO-A1-2015/120850
- DE-A1- 19 962 997
- DE-A1-102013 103 878

## Beschreibung

Die Erfindung betrifft ein Verfahren zum Betätigen einer Kupplung, vorzugsweise einer Reibungskupplung, eines Hybridantriebsstranges mittels einer Betätigungsvorrichtung, wobei die Betätigungsvorrichtung eine elektrische Aktoreinheit aufweist, die mit einem Schiebeglied verstellend auf ein Betätigungslager, das wiederum mit einem Stellelement, wie einer Hebelfeder, insbesondere einer Tellerfeder, der Kupplung bewegungsgekoppelt oder bewegungskoppelbar ist, einwirkt. Ferner betrifft die Erfindung einen Hybridantriebsstrang für ein Kraftfahrzeug, wie einen Pkw, Lkw, Bus oder ein anderes Nutzfahrzeug.

Gattungsgemäßer Stand der Technik ist aus der DE 10 2013 205 109 A1 bekannt. Hierin ist ein Verfahren zum Betrieb einer Betätigungsvorrichtung für eine Kupplung offenbart. Die Kupplung weist eine Statoreinrichtung, eine bzgl. der Statoreinrichtung verdrehbare Rotoreinrichtung und eine bezüglich der Rotoreinrichtung in axialer Richtung begrenzt verlagerbare Schlitteneinrichtung mit einem Ausrücklager, das mit einem Hebelelement der Kupplung in Anlage bringbar ist, auf. Ein Vorlastpunkt wird derart festgelegt, dass das Ausrücklager der Schlitteneinrichtung bei Drehung der Kupplung eine minimale Anpresskraft auf das Hebelelement der Kupplung ausübt, wobei die Statoreinrichtung zur Verlagerung der Schlitteneinrichtung derart bestromt wird, dass der Vorlastpunkt bei Drehung der Kupplung nicht unterschritten wird.

Es ist somit bereits bekannt, eine spezifische Position des Schiebegliedes der Aktoreinheit, die zur automatisierten Betätigung einer Hybridtrennkupplung in einem Fahrzeugantriebsstrang zwischen einer Verbrennungskraftmaschine und einer elektromechanischen Antriebsmaschine erforderlich ist, zu bestimmen. Die Schiebegliedposition gewährleistet als minimale Weggrenze, dass das Betätigungslager als Bestandteil der Aktoreinheit und das Stellelement, vorzugsweise mehrere Tellerfederzungen, als Teil der Kupplung nicht voneinander abheben. Ein Abheben des Betätigungslagers und das wieder Anpressen während des Betriebes bedeutet nämlich einen relativ hohen Energieeintrag in den Kontaktbereich mit dem Stellelement, insbesondere in die Tellerfederzungen, da diese durch Reibung den stehenden Außenring des Betätigungslagers beschleunigen. Durch die Reibung während der Beschleunigung wirken in Drehrichtung tangentiale Kräfte, die in Kombination mit einem Temperaturanstieg im gehärteten Bauteil ein Brechen des Stellelementes / der Tellerfederzungen in der Kupplung hervorrufen können. Um dieses Brechen zu vermeiden, ist deshalb der so genannte Vorlastpunkt zu bestimmen. Die bereits bekannte Logik soll das Abheben und Wieder-Anpressen des Betätigungslagers der Aktoreinheit und der Kupplung verhindern.

Es ist jedoch aufgefallen, dass sich der zu bestimmende Vorlastpunkt durch Einfluss äußerer Parameter, wie durch eine sich ändernde Umgebungstemperatur, einen sich ändernden atmosphärischem Luftdruck oder eine sich ändernde Luftfeuchtigkeit, verschiebt. Auch innere Parameter der Betätigungsvorrichtung sowie der Kupplung, von denen ebenfalls die Lebensdauer abhängig ist, wie die Abnutzung der Reibbeläge der Kupplung sowie der verschleißabhängige Nachstellmechanismus bei selbstnachstellenden Kupplungen, können sich während des Betriebs verändern. Dies macht eine wiederkehrende Bestimmung des Vorlastpunktes während des Betriebs durch eine in der Software hinterlegte Logik erforderlich.

Bei dem aus dem Stand der Technik bekannten Verfahren wird daher der Vorlastpunkt in bestimmten Zeitabständen neu bestimmt. Bei dem aus der DE 10 2013 205 109 A1 bekannten Verfahren wird vorzugsweise bei konstanter Spannung an der Aktoreinheit / am Elektromotor der Aktoreinheit von der minimal bis zu der maximal möglichen Position des Vorlastpunktes eine lineare Bewegung des Schiebegliedes durchgeführt. Während dieser Bewegung können drei physikalische Größen des Antriebs des Schiebegliedes gemessen werden. Hierbei werden die Position des Schiebegliedes und/oder die zugehörige lineare Kraftübertragung auf das Schiebeglied und/oder die lineare Geschwindigkeit des Schiebegliedes berücksichtigt. In der Auswertung wird dann bei konstanter Geschwindigkeit die konstante Kraft zur Überwindung der Reibung im System als Kennlinie im kartesischen Koordinatensystem dargestellt, wobei sich auf der Abszisse die Position des Schiebegliedes und auf der Ordinate die aufgebrachte lineare Kraft der Aktoreinheit befindet. Ab dem Punkt, an dem das Betätigungslager das Stellelement, insbesondere die Tellerfederzungen berührt, steigt die Kraft der Aktoreinheit deutlich an. Um den Punkt zwischen konstanter Kraft und Kraftanstieg zu erkennen, werden jeweils zwei Regressionskennlinien aus den Messpunkten in diesen Bereichen gebildet. Der Schnittpunkt beider gerader Kennlinien ist das Ergebnis dieses Verfahrens und der bestimmte Vorlastpunkt. In einer zweiten Variante wird auch die lineare Geschwindigkeit des Schiebegliedes mathematisch ausgewertet. Diese ist im Bereich vor dem Vorlastpunkt konstant und verlangsamt sich danach deutlich. Auch hier werden jeweils zwei Regressionskennlinien gebildet und ein Schnittpunkt berechnet.

Diese bekannte Schnittpunktbildung hat jedoch den Nachteil, dass sich unter stark ändernden Rahmenbedingungen, wie bei massivem Verschleiß der Kupplung oder stark erhöhter Temperatur, der Schnittpunkt nicht mehr am wahren Vorlastpunkt einstellt. Für die Auswahl der Messpunkte, die zur Bildung der Regressionskennlinien nötig sind, wird zum einen durch eine fest hinterlegte Zeitkonstante der Bereich der Beschleunigung des Schiebegliedes ausgeblendet. Das heißt, es werden nur Messpunkte, die nach Ablauf dieser Zeit aufgenommen werden, zur Bildung der horizontalen Regressionskennlinie verwendet. Zum anderen werden zur Bildung der Regressionskennlinie, die den Anstieg der linearen Verschiebekraft nach dem Vorlastpunkt darstellt, die Punkte verwendet, die vor dem Überschreiten einer festgelegten Schwelle an einer minimalen Steigung der Verschiebekraft über der Position gemessen wurde. Es ist bereits nachgewiesen, dass diese fest hinterlegten Parameter (Zeitkonstante und maximaler Schwellwert der Steigung) über die Lebensdauer des Systems verändert werden müssten, damit auch nach massivem Verschleiß oder bei stark erhöhter Temperatur die Bestimmung des Vorlastpunktes durch dieses Verfahren fehlerfrei funktioniert. Es besteht somit eine nicht vorhandene Robustheit des bisher umgesetzten Verfahrens.

Es ist daher die Aufgabe der vorliegenden Erfindung die aus dem Stand der Technik bekannten Nachteile zu beheben und insbesondere ein Verfahren zur Verfügung zu stellen, bei dem der Vorlastpunkt auch bei sich stark ändernden Umgebungsbedingungen sicher bestimmt werden soll.

Dies wird erfindungsgemäß durch die Merkmale des Anspruchs 1 gelöst, wobei das Verfahren zum Betätigen einer Kupplung eines Hybridantriebsstranges mittels einer Betätigungsvorrichtung umgesetzt wird, wobei die Betätigungsvorrichtung eine elektrische Aktoreinheit aufweist, die mit einem Schiebeglied verstellend auf ein Betätigungslager, das wiederum mit einem Stellelement der Kupplung bewegungsgekoppelt oder bewegungskoppelbar ist, einwirkt, und wobei ein Vorlastpunkt, an dem das Betätigungslager mit einer Mindestverschiebekraft an dem Stellelement angedrückt wird, so bestimmt wird, dass zunächst das Schiebeglied unter Erstellen einer Ist-Kennlinie, die ein Verhalten eines physikalischen Bewegungskennwertes des Schiebegliedes beschreibt, über einen Verschiebeweg, in dem sich der Vorlastpunkt theoretisch befindet, hinweg bewegt wird, anschließend die Ist-Kennlinie mit einer für diesen Verschiebeweg hinterlegten Soll-Kennlinie verglichen wird und der Vorlastpunkt an jenem Punkt entlang der Ist-Kennlinie festgelegt wird, der keine oder die geringste Abweichung zu einem Vergleichspunkt der Soll-Kennlinie aufweist.

Es ist dadurch ein Verfahren zur Auswertung der aktorspezifischen, physikalischen Messgrößen umgesetzt, das unabhängig von festen Schwellwerten auch unter allen Rahmenbedingungen den Vorlastpunkt innerhalb der gegebenen maximalen Toleranzschwellen bestimmen kann. Insbesondere wird durch den Wegfall von festen Parametern bei der mathematischen Auswertung der Messgrößen bei diesem Verfahren eine deutlich größere Robustheit realisiert. Die Auswertungsmethode erfasst somit auch bei stark veränderten Umgebungsparametern zuverlässig den Vorlastpunkt.

Weitere vorteilhafte Ausführungsformen sind mit den Unteransprüchen beansprucht und nachfolgend näher erläutert.

Wenn vor den Vergleichen der Ist-Kennlinie mit der Soll-Kennlinie die Soll-Kennlinie so weit relativ zu der Ist-Kennlinie verschoben wird, bis eine Abweichung zwischen den beiden Kennlinien minimal ist, wird die Bestimmung des Vorlastpunktes weiter präzisiert.

In diesem Zusammenhang ist es zudem zweckmäßig, wenn ein eine Abweichung zwischen der Ist-Kennlinie und der Soll-Kennlinie ausdrückendes Bestimmtheitsmaßes berechnet wird und die Kennlinien so weit relativ zueinander verschoben werden, bis das Bestimmtheitsmaß minimal ist. Damit wird eine besonders einfach im Betrieb mittels einer Software umsetzbare Berechnungslogik realisiert.

Bezüglich des Bestimmtheitsmaßes ist es des Weiteren vorteilhaft, wenn dieses durch eine Methode zur Berechnung der kleinsten Fehlerquadrate berechnet wird. Diese Methode wird bevorzugt durch direkte Rechenformeln anhand der realisierten Software umgesetzt, um eine numerische Stabilität zu erhalten. Weiter bevorzugt ist die Methode jedoch durch ein Filter implementiert, das etwa ein orthogonales Filter/ Savitzky-Golay-Filter ausgebildet ist.

Ist die Ist-Kennlinie und/oder die Soll-Kennlinie als eine zweidimensionale Kennlinie ausgeführt, sind/ist die jeweilige Kennlinie besonders einfach mathematisch berechenbar bzw. darstellbar. Der Vorlastpunkt wird dabei weiter bevorzugt an dem Punkt entlang der Ist-Kennlinie festgelegt, der keine oder die geringste Abweichung in Abszissenrichtung, weiter bevorzugt sowohl in Abszissenrichtung als auch in Ordinatenrichtung, von dem Vergleichspunkt der Soll-Kennlinie aufweist.

Diesbezüglich ist es wiederum von Vorteil, wenn die Ist-Kennlinie bei einem Konstanthalten einer Verschiebegeschwindigkeit des Stellelementes über den Verschiebeweg hinweg erfasst wird. Dadurch ist die Ist-Kennlinie im Betrieb besonders einfach aufzeichenbar. Hierzu ist bevorzugt der Bewegungskennwert als eine Betätigungsgröße, vorzugsweise eine Bewegungskraft / Verschiebekraft oder ein der Antriebseinheit zum Antrieb des Schiebegliedes zugeführter Stromwert, umgesetzt. Somit stellt die Ist-Kennlinie bevorzugt eine Kennlinie des elektrischen Stroms / der Verschiebekraft über den Verschiebeweg hinweg dar. Auch die Soll-Kennlinie ist somit bevorzugt als eine Kennlinie ausgebildet, die den elektrischen Strom / die Verschiebekraft über den Verschiebeweg hinweg darstellt.

Alternativ hierzu ist es jedoch auch möglich, die Ist-Kennlinie bei einem Konstanthalten einer Betätigungsgröße, wie der Bewegungskraft / Verschiebekraft oder dem der Antriebseinheit zum Antrieb des Schiebegliedes zugeführten Stromwert / elektrischen Strom, über den Verschiebeweg hinweg zu erfassen. Zweckmäßig ist es dabei wiederum, wenn der Bewegungskennwert eine Verschiebegeschwindigkeit des Stellelementes ist / darstellt. Auch die Soll-Kennlinie ist dann bevorzugt als eine Kennlinie ausgeführt, die die Verschiebegeschwindigkeit über den Verschiebeweg hinweg darstellt.

Zudem betrifft die Erfindung einen Hybridantriebsstrang für ein Kraftfahrzeug, mit einer eine Betätigungsvorrichtung aufweisenden Kupplung, wobei die Betätigungsvorrichtung so mittels einer elektrischen Antriebseinheit auf die Kupplung einwirkt, dass sie durch ein erfindungsgemäßes Verfahren nach zumindest einer der zuvor beschriebenen Ausführungen betätigbar ist.

Diesbezüglich ist es wiederum zweckmäßig, wenn eine elektrische Maschine sowie ein Verbrennungsmotor vorgesehen sind und die Kupplung zwischen dem Verbrennungsmotor und der elektrischen Maschine angeordnet ist. Dadurch ist ein Antriebsstrang umgesetzt, der besonders langlebig durch die Kupplung in die unterschiedlichen Antriebszustände bringbar ist.

In anderen Worten ausgedrückt, ist erfindungsgemäß ein Verfahren zum Erfassen eines Berührpunktes zwischen einem Aktor (Schiebeglied der Betätigungsvorrichtung) und einer trockenen Reibungskupplung in einem Hybridantriebsstrang umgesetzt. Vorzugsweise werden eine Aktorposition (Position des Schiebegliedes) sowie eine lineare Kraft beim Verschieben erfasst, wobei eine zweidimensionale Kurve (Ist-Kennlinie) auf Grundlage der erfassten Werte erstellt wird. Die auf diese Weise erhaltene Kurve wird mit einer festgelegten Sollkurve (Soll-Kennlinie) verglichen, indem die Kurven relativ zueinander verschoben und vorzugsweise zumindest teilweise übereinander gelegt werden. Ein minimaler Wert eines Bestimmtheitsmaßes wird festgelegt, indem die Methode der kleinsten Fehlerquadrate angewendet wird, sodass schließlich der Berührpunkt (Vorlastpunkt) an einem Punkt festgelegt wird, der das geringste Bestimmtheitsmaß aufweist.

Die Erfindung wird nun nachfolgend anhand von Figuren näher erläutert, in welchem Zusammenhang auch prinzipiell unterschiedliche Ausführungsbeispiele beschrieben sind.

Es zeigen:

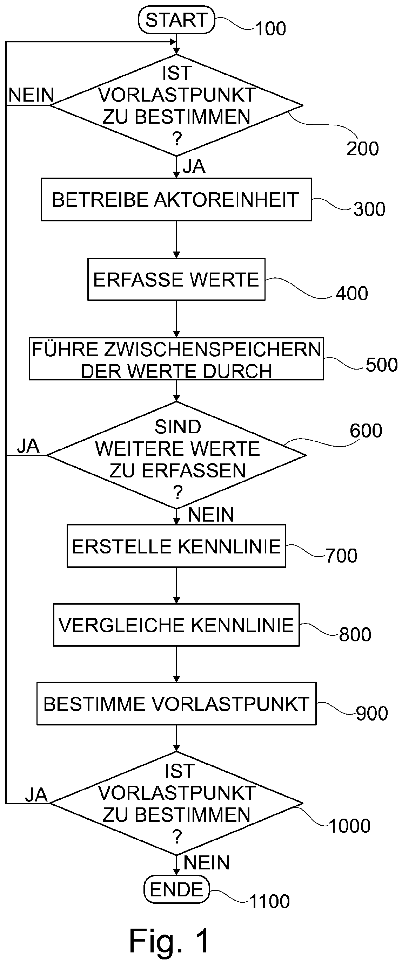

- Fig. 1: ein schematisches Flussdiagramm eines erfindungsgemäßen Verfahrens zum Betätigen einer Kupplung eines Hybridantriebsstranges nach einem bevorzugten Ausführungsbeispiel,

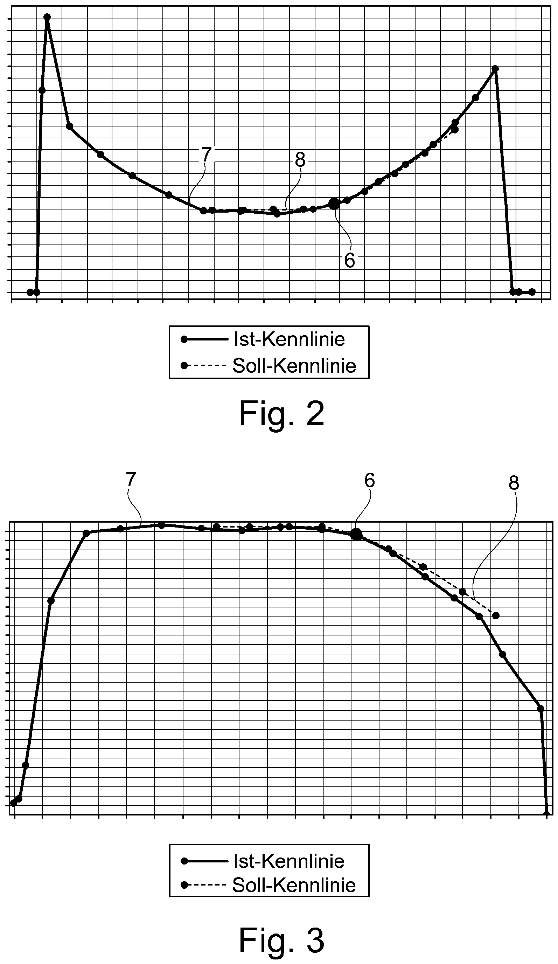

- Fig. 2: ein Diagramm, das zum Vergleichen einer Ist-Kennlinie mit einer SollKennlinie in dem Verfahren nach Fig. 1 dient, wobei auf der Ordinate ein elektrischer Strom, der einer elektrischen Antriebseinheit einer Betätigungsvorrichtung zugeführt wird, aufgetragen ist und auf der Abszisse ein Verschiebeweg eines durch die Antriebseinheit verschiebend angetriebenen Schiebegliedes aufgetragen ist, wobei das Schiebeglied in dem Verschiebeweg mit einer gleichbleibenden Verschiebegeschwindigkeit bewegt wird,
- Fig. 3: ein Diagramm, das zum Vergleichen einer Ist-Kennlinie mit einer SollKennlinie in einem erfindungsgemäßen Verfahren nach einem zweiten Ausführungsbeispiel dient, wobei wiederum eine Ist-Kennlinie sowie eine SollKennlinie abgebildet sind, diese nun jedoch einen Verlauf einer sich ändernden Verschiebegeschwindigkeit des Schiebegliedes über den Verschiebeweg hinweg, bei einem gleichbleibenden elektrischen Strom, darstellt, und

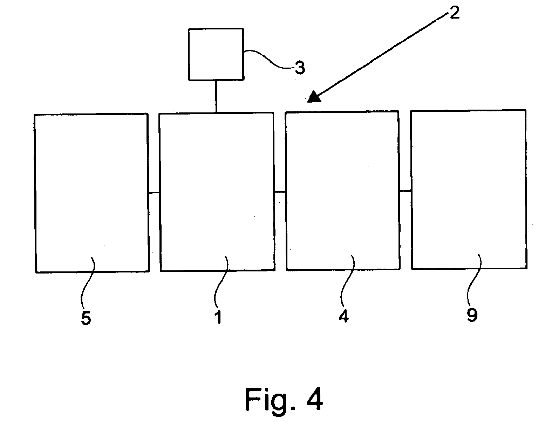

- Fig. 4: eine vereinfachte Prinzipdarstellung eines Hybridantriebsstranges, der durch das erfindungsgemäße Verfahren betätigbar ist.

Die Figuren sind lediglich schematischer Natur und dienen ausschließlich dem Verständnis der Erfindung. Die gleichen Elemente sind mit denselben Bezugszeichen versehen.

In Fig. 1 ist ein erfindungsgemäßes Verfahren nach einem bevorzugten ersten Ausführungsbeispiel übersichtlich dargestellt. Das dargestellte Flussdiagramm wird insbesondere durch eine Software mittels einer Logik zum Ansteuern einer Betätigungsvorrichtung 3 umgesetzt. Die in Fig. 4 schematisch dargestellte Betätigungsvorrichtung 3 dient wiederum zum Betätigen einer Kupplung 1 in einem Antriebsstrang 2 eines Kraftfahrzeuges. Der Antriebsstrang 2 ist als Hybridantriebsstrang ausgebildet und weist folglich neben einem Verbrennungsmotor 5 auch eine elektrische Maschine 4 / einen Elektromotor auf. Die Kupplung 1 ist in Form einer Trennkupplung, nämlich einer Reibungskupplung / Reibbelagskupplung im Antriebsstrang 2 zwischen dem Verbrennungsmotor 5 und der elektrischen Maschine 4 eingesetzt. Die elektrische Maschine 4 eines Elektrotraktionsantriebes. Im Anschluss an die elektrische Maschine bzw. an den Elektrotraktionsantrieb ist ein Getriebe 9 in dem Antriebsstrang 2 enthalten. Die auf die Kupplung 1 verstellend einwirkende Betätigungsvorrichtung 3 ist prinzipiell gemäß der in der DE 10 2013 205 109 A1 umgesetzten Betätigungsvorrichtung aufgebaut sowie funktionierend, sodass deren weiterer Aufbau sowie weitere Funktionsweise als hierin integriert gilt.

Die Betätigungsvorrichtung 3 weist eine hier der Übersichtlichkeit halber nicht weiter dargestellte elektrische Aktoreinheit auf. Die elektrische Antriebseinheit weist wiederum einen Elektromotor auf, der unter Zwischenschaltung eines Schraubenfedertriebes, verschiebend auf ein Schiebeglied der Betätigungsvorrichtung 3 einwirkt. Durch den in entgegengesetzten Antriebsrichtungen betreibbaren Elektromotor kann das Schiebeglied auf übliche Weise in seinen entgegengesetzten Verschieberichtungen hin und her bewegt werden. Das Schiebeglied ist wiederum verschiebefest mit einem Betätigungslager gekoppelt, sodass das Betätigungslager beim Verschieben des Schiebegliedes den gleichen Verschiebeweg wie das Schiebeglied umsetzt. Das Betätigungslager wirkt bevorzugt als ein Ausrücklager auf die Kupplung 1. Das Betätigungslager wirkt hierzu auf ein Stellelement der Kupplung 1 ein. Um die Kupplung zu betätigen, d.h. zwischen ihrer eingerückten / eingekuppelten Stellung und ihrer ausgerückten / ausgekuppelten Stellung zu verbringen, ist das Betätigungslager mit dem Stellelement, hier in Form einer Tellerfeder, bewegungsgekoppelt oder bewegungskoppelbar. Insbesondere ist das Betätigungslager jedoch nicht mit der Tellerfeder fest verbunden, sondern lediglich an dieser anlegbar.

Das erfindungsgemäße Verfahren, das über eine in einem Steuergerät hinterlegte Software umgesetzt wird, wird beim Betrieb der Betätigungsvorrichtung 3 durch eine Ansteuerungslogik / Software-Logik umgesetzt, die die in Fig. 1 veranschaulichten Schritte 100 bis 1100 durchläuft. Das in Fig. 1 dargestellte Verfahren dient zum Ermitteln eines Vorlastpunktes 6, wie nachfolgend näher beschrieben, an welchem Vorlastpunkt 6 es zu einem Berühren des Betätigungslagers mit dem Stellelement kommt. Der Vorlastpunkt ist daher auch als Berührpunkt bezeichnet.

Zunächst wird die Ansteuerungslogik zu einem bestimmten Zeitpunkt in Schritt 100 gestartet. Nach dem Beginn des Verfahrens 100, ist eine Entscheidung zu treffen, ob der Vorlastpunkt 6 überhaupt bestimmt werden soll oder nicht. Stellt die Software fest, dass der Vorlastpunkt 6 nicht ermittelt werden soll (Antwort NEIN), wird die Ansteuerungslogik auf den Start 100 zurückgesetzt. Stellt die Software fest, dass der Vorlastpunkt 6 ermittelt werden soll (Antwort JA) wird mit dem aktiven Antrieb / Betrieb der Betätigungsvorrichtung 3 in Schritt 300 begonnen.

In Schritt 300 wird die Betätigungsvorrichtung 3 so betätigt, dass die Antriebseinheit das Schiebeglied entlang eines vorbestimmten (theoretischen) Verschiebeweges verschiebt. Der vorbestimmte Verschiebeweg ist ein zuvor festgelegter Paramater / Weg, bei dem sicher gewährleistet ist, dass sich der zu bestimmende Vorlastpunkt 6 im Betriebszustand der Betätigungsvorrichtung dort befindet. Der Verschiebeweg weist folglich einen ersten Teilweg, in dem sich das Betätigungslager und das Stellelement noch nicht berühren, sowie einen zweiten Teilweg, in dem das Betätigungslager und das Stellelement sicher aneinander anliegen, auf. Zwischen den Teilwegen ist der Vorlastpunkt 6 angeordnet. Das Verschieben in Schritt 300 dient daher zum sicheren Erreichen des Vorlastpunktes 6. Messtechnisch ist der Vorlastpunkt 6 einfach erfassbar, da bei Erreichen des Vorlastpunktes 6 eine Mindestverschiebekraft von dem Betätigungslager auf das Stellelement aufzubringen ist.

Zeitgleich mit dem Verschieben nach Schritt 300 innerhalb des vorbestimmten Verschiebeweges wird in Schritt 400 eine Ist-Kennlinie 7 aufgezeichnet / erfasst. Hierfür werden insbesondere der Verschiebeweg sowie ein Bewegungskennwert erfasst. Der Bewegungskennwert ist insbesondere ein physikalischer Bewegungskennwert / eine physikalische Betätigungsgröße, der das Bewegungsverhalten des Schiebegliedes charakterisiert / beschreibt / darstellt.

In dem nach Fig. 1 umgesetzten Verfahren nach dem ersten Ausführungsbeispiel, wie dann weiterhin in Fig. 2 zu erkennen, ist der Bewegungskennwert ein elektrischer Stromwert / Strom, der der elektrischen Antriebseinheit / dem Elektromotor zugeführt wird. Dieser Bewegungskennwert ist somit ein mit der Verschiebekraft, die auf das Schiebeglied wirkt, proportionaler Wert. Dieser Bewegungskennwert wird über den gesamten Verschiebeweg, in dem sich der Vorlastpunkt 6 theoretisch befindet, erfasst. Zugleich wird der Strom derart gesteuert, dass eine gleichbleibende Verschiebegeschwindigkeit des Schiebegliedes in dem Verschiebeweg sicher gestellt ist.

Ebenfalls zeitgleich mit dem Erfassen des Bewegungskennwertes in Abhängigkeit des Verschiebeweges nach Schritt 400 erfolgt das Zwischenspeichern der ermittelten Messreihe an Werten in Schritt 500. In Schritt 600 wird dann nochmals überprüft, ob tatsächlich auch alle notwendigen Werte mit der Messreihe erfasst sind oder, ob ggf. weitere Werte erfasst werden sollten. Wird hierbei die Entscheidung JA getroffen, ist erneut mit dem Schritt 100 zu beginnen. Wird die Entscheidung NEIN getroffen, wird letztendlich in Schritt 700 eine zweidimensionale Ist-Kennlinie 7 nach Fig. 2 erstellt.

Im Anschluss daran (Schritt 800) wird die Ist-Kennlinie 7 mit einer für den Verschiebeweg wiederum hinterlegten Soll-Kennlinie 8 verglichen, wobei der Vorlastpunkt 6 an jenem Punkt entlang der Ist-Kennlinie 7 festgelegt, der keine oder die geringste Abweichung zu einem Vergleichspunkt der Soll-Kennlinie 8 aufweist. Hierbei ist der Vorlastpunkt 6 in Fig. 2 mit einem dicken Kreis gekennzeichnet, da in diesem Bereich die Ist-Kennlinie 7 die geringste Abweichung relativ zu der Soll-Kennlinie 8 aufweist. Die Soll-Kennlinie 8 ist hierbei eine Kennlinie, die einen theoretisch optimalen Verlauf der Ist-Kennlinie 7 ausbildet. Die Soll-Kennlinie 8 stellt daher eine Kennlinie dar, die zuvor innerhalb des vorbestimmten Verschiebeweges aufgenommen worden ist und den hierin idealen Verlaufswert darstellt. Die Ist-Kennlinie 7 stellt denselben physikalischen Bewegungskennwert über den Verschiebeweg hinweg dar wie die Soll-Kennlinie 8.

Vor dem Vergleichen kann es prinzipiell auch notwendig sein, die Kennlinien 7, 8 etwas relativ zueinander (mathematisch) zu verschieben, da sich im Betrieb auch der Bereich des Verschiebeweges aufgrund der verschleißenden Bestandteile der Kupplung 1 oder aufgrund sich ändernder Umgebungsparameter verschieben können. Vor dem Vergleichen der Ist-Kennlinie 7 mit der Soll-Kennlinie 8 wird daher in dem Verfahren bevorzugt die Soll-Kennlinie 8 relativ zu der Ist-Kennlinie 7 derart verschoben, bis ein Bestimmtheitsmaß minimal ist. Das Bestimmtheitsmaß gibt hierbei insbesondere die Abweichung (in Ordinatenrichtung sowie in Abszissenrichtung) zwischen der Ist-Kennlinie 7 und der Soll-Kennlinie 8 wieder. Das Bestimmtheitsmaß wird insbesondere durch eine Methode zur Berechnung der kleinsten Fehlerquadrate berechnet.

Nach dem Vergleichen der Kennlinien 7, 8 nach Schritt 800, wird somit der Vorlastpunkt 6 nach Schritt 900 bestimmt. Somit ist stets der Software-Logik bekannt, an welchem Punkt das Stellelement durch das Betätigungslager sicher berührt wird / sicher mit einer Mindestverschiebekraft an das Betätigungslager angedrückt wird. Dieser Vorlastpunkt 6 ist in regelmäßigen Abständen zu bestimmen, sodass der Vorlastpunkt 6 auch bei sich ändernden Umgebungswerten stets korrekt ermittelt wird.

Letztendlich wird nach dem Bestimmen des Vorlastpunktes 6 nochmals eine Entscheidung durch die Logik getroffen, ob der Vorlastpunkt 6 nochmals bestimmt werden soll. Wird diese Frage mit JA beantwortet, wird wiederum mit Schritt 100 begonnen, wird die Frage mit NEIN beantwortet, ist die Vorlastpunktbestimmung nach Schritt 1100 beendet.

Alternativ zu dem in den Fig. 1 und 2 veranschaulichten Verfahren ist es möglich, gemäß dem zweiten Ausführungsbeispiel nach Fig. 3, welches Verfahren weitestgehend wie das Verfahren des ersten Ausführungsbeispiels aufgebaut sowie funktionierend ist, die Betätigungsgröße, nämlich den der Antriebseinheit zugeführten Strom und somit die auf das Schiebeglied ausgeübte Verschiebekraft konstant zu halten und die sich dabei ändernde Verschiebegeschwindigkeit zu erfassen.

In anderen Worten ausgedrückt, werden erfindungsgemäß bei einem Verfahren zur Bestimmung des Vorlastpunktes 6 physikalische Kenngrößen des Aktormotors (Elektromotors) verwendet. Der Aktormotor wird mit einer konstanten Geschwindigkeit beginnend vor dem Vorlastpunkt bis zum maximal möglichen Vorlastpunkt bewegt. Die Aktorposition (Position des Schiebegliedes) sowie die lineare übertragene Kraft (Verschiebekraft) des Aktormotors werden erfasst und für die Auswertung zwischengespeichert. Diese Größen werden bildlich gesehen zu zweidimensionalen Kennlinien 7, 8 zusammengefasst. Eine fest in der Software hinterlegte Kennlinie (Soll-Kennlinie) stellt den Verlauf an dem Vorlastpunkt 6 im Idealfall dar. Zum Vergleich der gemessenen und der nominellen Kennlinie 7, 8 werden die beiden Kennlinie 7,8 mathematisch verschoben und übereinander gelegt. Mit Hilfe der Methode der Berechnung der kleinsten Fehlerquadrate wird das Bestimmtheitsmaß berechnet, welches als Maß dient darzustellen, wie deckungsgleich die aufgenommene und die nominelle Kennlinie 7, 8 zueinander sind. Bei der Suche des Vorlastpunktes 6 wird die nominelle Kennlinie 8 Punkt für Punkt über die aufgenommene Kennlinie 7 geschoben. Der Wert des Bestimmtheitsmaßes wird kleiner abhängig davon wie deckungsgleich die beiden Kennlinien 7, 8 sind. Ein Minimum des Bestimmtheitsmaßes gibt an, dass nominelle und gemessene Kennlinie 7, 8 nahezu deckungsgleich übereinander liegen. Der Vorlastpunkt 6 wird als Punkt in der Kennlinie 7 an der Position mit minimalem Bestimmtheitsmaß angegeben. Der Vergleich von Messdaten findet folglich mit einer fest in der Logik hinterlegten Datenkurve mit der angewandten Methode des kleinsten Fehlerquadrats auch bei leicht veränderter Steigung immer das beste Ergebnis, da die bestmögliche Übereinstimmung beider Kurven 7, 8 zuverlässig ein passendes Ergebnis liefert. In einer ersten Variante erfolgt die Bestimmung des Vorlastpunktes 6 mit linearer Kraft des Aktormotors, wobei die gemessene lineare Aktorausrückkraft bei einer konstant ausgeführten Bewegung des Aktors (Schiebegliedes) verglichen wird. Insbesondere wird die Messkurve (Ist-Kennlinie 7) mit einer nominellen Kennlinie 8 verglichen. Die Bestimmung des Vorlastpunktes 6 erfolgt durch Verschieben der nominellen Kurve 8. Bei Deckungsgleichheit wird der Abszissenwert als Wegpunkt des Vorlastpunktes 6 übernommen. In einer zweiten Variante erfolgt die Bestimmung des Vorlastpunktes 6 mit der Aktorgeschwindigkeit. Der Vergleich der gemessenen linearen Aktorgeschwindigkeit erfolgt bei einer konstant ausgeführten Bewegung des Aktors. Auch erfolgt ein Vergleich der Messkurve 7 mit einer nominellen Kennlinie 8. Die Bestimmung des Vorlastpunktes 6 erfolgt durch Verschieben der nominellen Kurve 8. Bei Deckungsgleichheit wird der Abszissenwert als Wegpunkt des Vorlastpunktes 6 übernommen.

### Bezugszeichenliste

- 1: Kupplung
- 2: Antriebsstrang
- 3: Betätigungsvorrichtung
- 4: elektrische Maschine
- 5: Verbrennungsmotor
- 6: Vorlastpunkt
- 7: Ist-Kennlinie
- 8: Soll-Kennlinie
- 9: Getriebe
- 100: erster Schritt
- 200: zweiter Schritt
- 300: dritter Schritt
- 400: vierter Schritt
- 500: fünfter Schritt
- 600: sechster Schritt
- 700: siebter Schritt
- 800: achter Schritt
- 900: neunter Schritt
- 1000: zehnter Schritt
- 1100: elfter Schritt

## Patentansprüche

1. Verfahren zum Betätigen einer Kupplung (1) eines Hybridantriebsstranges (2) mittels einer Betätigungsvorrichtung (3), wobei die Betätigungsvorrichtung (3) eine elektrische Aktoreinheit aufweist, die mit einem Schiebeglied verstellend auf ein Betätigungslager, das wiederum mit einem Stellelement der Kupplung (1) bewegungsgekoppelt oder bewegungskoppelbar ist, einwirkt, wobei
ein Vorlastpunkt (6), an dem das Betätigungslager mit einer Mindestverschiebekraft an dem Stellelement angedrückt wird, so bestimmt wird, dass zunächst das Schiebeglied unter Erstellen einer Ist-Kennlinie (7), die ein Verhalten eines physikalischen Bewegungskennwertes des Schiebegliedes beschreibt, über einen Verschiebeweg, in dem sich der Vorlastpunkt (6) theoretisch befindet, hinweg bewegt wird, anschließend die Ist-Kennlinie (7) mit einer für diesen Verschiebeweg hinterlegten Soll-Kennlinie (8) verglichen wird und der Vorlastpunkt (6) an jenem Punkt entlang der Ist-Kennlinie festgelegt wird (900), der keine oder die geringste Abweichung zu einem Vergleichspunkt der Soll-Kennlinie (8) aufweist.

2. Verfahren nach Anspruch 1, **dadurch gekennzeichnet, dass** vor dem Vergleichen der Ist-Kennlinie (7) mit der Soll-Kennlinie (8) die Soll-Kennlinie (8) so weit relativ zu der Ist-Kennlinie (7) verschoben wird bis eine Abweichung zwischen den Kennlinien (7, 8) minimal ist.

3. Verfahren nach Anspruch 1 oder 2, **dadurch gekennzeichnet, dass** ein eine Abweichung zwischen der Ist-Kennlinie (7) und der Soll-Kennlinie (8) ausdrückendes Bestimmtheitsmaß berechnet wird und die Kennlinien (7, 8) so weit relativ zueinander verschoben werden bis das Bestimmtheitsmaß minimal ist.

4. Verfahren nach Anspruch 3, **dadurch gekennzeichnet, dass** das Bestimmtheitsmaß durch eine Methode zur Berechnung der kleinsten Fehlerquadrate berechnet wird.

5. Verfahren nach einem der Ansprüche 1 bis 4, **dadurch gekennzeichnet, dass** die Ist-Kennlinie (7) bei einem Konstanthalten einer Verschiebegeschwindigkeit des Schiebegliedes über den Verschiebeweg hinweg erfasst wird.

6. Verfahren nach Anspruch 5, **dadurch gekennzeichnet, dass** der Bewegungskennwert eine Bewegungskraft oder ein der Antriebseinheit zum Antrieb des Schiebegliedes zugeführter Stromwert ist.

7. Verfahren nach einem der Ansprüche 1 bis 4, **dadurch gekennzeichnet, dass** die Ist-Kennlinie (7) bei einem Konstanthalten einer Betätigungsgröße, wie einer Bewegungskraft oder einem der Antriebseinheit zum Antrieb des Schiebegliedes zugeführten Stromwert, über den Verschiebeweg hinweg erfasst wird.

8. Verfahren nach Anspruch 7, **dadurch gekennzeichnet, dass** der Bewegungskennwert eine Verschiebegeschwindigkeit des Schiebegliedes ist.

9. Hybridantriebsstrang (2) für ein Kraftfahrzeug, mit einer eine Betätigungsvorrichtung (3) aufweisenden Kupplung (1), wobei die Betätigungsvorrichtung (3) so mittels einer elektrischen Antriebseinheit auf die Kupplung (1) einwirkt, dass sie durch ein Verfahren nach einem der Ansprüche 1 bis 8 betätigt ist.

10. Hybridantriebsstrang (2) nach Anspruch 9, wobei eine elektrische Maschine (4) sowie ein Verbrennungsmotor (5) vorgesehen sind und die Kupplung (1) zwischen dem Verbrennungsmotor (5) und der elektrischen Maschine (4) angeordnet ist.

## Claims

1. A method for actuating a clutch (1) of a hybrid drive train (2) by means of an actuating device (3), wherein the actuating device (3) has an electrical actuator unit which acts, by means of a sliding element, in an adjusting manner on an actuation bearing, which in turn is or can be kinematically coupled to a control element of the clutch (1), wherein a pre-load point (6), at which the actuation bearing is pressed against the control element with a minimum sliding force, is determined such that, firstly, the sliding element is moved over a displacement path, in which the pre-load point (6) is theoretically located, while creating an actual characteristic curve (7) that describes the behaviour of a physical movement characteristic of the sliding element, then the actual characteristic curve (7) is compared with a target characteristic curve (8) stored for said displacement path, and the pre-load point (6) is defined (900) at the point along the actual characteristic curve that has no or the smallest deviation from a comparison point of the target characteristic curve (8).

2. The method according to claim 1, **characterised in that,** before comparing the actual characteristic curve (7) with the target characteristic curve (8), the target characteristic curve (8) is shifted relative to the actual characteristic curve (7) until there is minimal deviation between the characteristic curves (7, 8).

3. The method according to claim 1 or 2, **characterised in that** a coefficient of determination expressing a deviation between the actual characteristic curve (7) and the target characteristic curve (8) is calculated and the characteristic curves (7, 8) are shifted relative to one another until the coefficient of determination is minimal.

4. The method according to claim 3, **characterised in that** the coefficient of determination is calculated by a least squares calculation method.

5. The method according to one of claims 1 to 4, **characterised in that** the actual characteristic curve (7) is recorded while keeping a displacement speed of the sliding element constant over the displacement path.

6. The method according to claim 5, **characterised in that** the movement characteristic is a movement power or a current value supplied to the drive unit for driving the sliding element.

7. The method according to any one of claims 1 to 4, **characterised in that** the actual characteristic curve (7) is recorded over the displacement path while an actuating variable, such as a movement power or a current value supplied to the drive unit for driving the sliding element, is kept constant.

8. The method according to claim 7, **characterised in that** the movement characteristic is a displacement speed of the sliding element.

9. A hybrid drive train (2) for a motor vehicle, comprising a clutch (1) having an actuating device (3), wherein the actuating device (3) acts on the clutch (1) by means of an electrical drive unit such that said clutch is actuated by a method according to any one of claims 1 to 8.

10. The hybrid drive train (2) according to claim 9, wherein an electrical machine (4) and an internal combustion engine (5) are provided and the clutch (1) is arranged between the internal combustion engine (5) and the electrical machine (4).

## Revendications

1. Procédé permettant d'actionner un embrayage (1) d'une chaîne cinématique hybride (2) au moyen d'un dispositif d'actionnement (3), dans lequel ledit dispositif d'actionnement (3) comprend une unité d'actionneur électrique, laquelle agit de manière à pouvoir régler, à l'aide d'un élément coulissant, sur un palier d'actionnement, lequel est ensuite couplé ou peut être couplé en déplacement à un élément de réglage de l'embrayage (1), dans lequel
un point de précharge (6), auquel le palier d'actionnement est pressé contre l'élément d'actionnement avec une force de coulissement minimale, est déterminé de telle sorte que l'élément coulissant est d'abord déplacé, générant ainsi une courbe caractéristique réelle (7), laquelle décrit un comportement d'une valeur caractéristique de déplacement physique de l'élément coulissant, sur une trajectoire de déplacement dans laquelle le point de précharge (6) se trouve théoriquement, puis, la courbe caractéristique réelle (7) est comparée à une courbe caractéristique consigne (8) mémorisée pour ladite trajectoire de déplacement et le point de précharge (6) est déterminé (900) en ce point le long de la courbe caractéristique réelle, lequel ne présente aucun ou présente le moindre écart par rapport à un point de comparaison de la courbe caractéristique cible (8).

2. Procédé selon la revendication 1, **caractérisé en ce que,** avant la comparaison de la courbe caractéristique réelle (7) avec la courbe caractéristique consigne (8), la courbe caractéristique consigne (8) est décalée par rapport à la courbe caractéristique réelle (7) jusqu'à ce qu'un écart entre les courbes caractéristiques (7, 8) soit minimal.

3. Procédé selon la revendication 1 ou 2, **caractérisé en ce qu'**un coefficient de détermination exprimant un écart entre la courbe caractéristique réelle (7) et la courbe caractéristique consigne (8) est calculé et que les courbes caractéristiques (7, 8) sont décalées l'une par rapport à l'autre jusqu'à ce que le coefficient de détermination soit minimal.

4. Procédé selon la revendication 3, **caractérisé en ce que** le coefficient de détermination est calculé selon un procédé de calcul des moindres carrés d'erreurs.

5. Procédé selon l'une quelconque des revendications 1 à 4, **caractérisé en ce que** la courbe caractéristique réelle (7) est détectée en maintenant constante une vitesse de déplacement de l'élément coulissant sur la trajectoire de déplacement.

6. Procédé selon la revendication 5, **caractérisé en ce que** la caractéristique de déplacement est une force de déplacement ou une valeur de courant fournie à l'unité d'entraînement pour entraîner l'élément coulissant.

7. Procédé selon l'une quelconque des revendications 1 à 4, **caractérisé en ce que** la courbe caractéristique réelle (7) est détectée en maintenant constante une grandeur d'actionnement, telle qu'une force de déplacement ou une valeur de courant fournie à l'unité d'entraînement pour entraîner l'élément coulissant, sur la trajectoire de déplacement.

8. Procédé selon la revendication 7, **caractérisé en ce que** la valeur caractéristique de déplacement est une vitesse de déplacement de l'élément coulissant.

9. Chaîne cinématique hybride (2) pour un véhicule à moteur, comprenant un embrayage (1) comportant un dispositif d'actionnement (3), dans laquelle ledit dispositif d'actionnement (3) agit sur l'embrayage (1) au moyen d'une unité d'entraînement électrique de telle sorte qu'il est activé à l'aide d'un procédé selon l'une quelconque des revendications 1 à 8.

10. Chaîne cinématique hybride (2) selon la revendication 9, dans laquelle sont présents une machine électrique (4) ainsi qu'un moteur à combustion interne (5) et l'embrayage (1) est disposé entre le moteur à combustion interne (5) et la machine électrique (4).
